Europäisches Patentamt

(19) European Patent Office (11) Publication number: **0 166 378**

Office européen des brevets **B1**

(12) **EUROPEAN PATENT SPECIFICATION**

(45) Date of publication of patent specification: **11.01.89** (51) Int. Cl.⁴: **B 60 R 1/06**

(21) Application number: **85107640.6**

(22) Date of filing: **20.06.85**

(54) Electrically foldable door mirror.

(30) Priority: **28.06.84 JP 131995/84**
**19.02.85 JP 29472/85**

(43) Date of publication of application:
**02.01.86 Bulletin 86/01**

(45) Publication of the grant of the patent:
**11.01.89 Bulletin 89/02**

(84) Designated Contracting States:
**DE GB**

(56) References cited:
**EP-A-0 146 888**
**DE-U-7 503 867**
**DE-U-8 209 925**

(73) Proprietor: **MURAKAMI KAIMEIDO CO., LTD**
**12-25, Miyamoto-cho Shizuoka-shi**
**Shizuoka 422 (JP)**

(72) Inventor: **Kumai, Toshiyuki**
**78-4, Hyodayu**
**Fujieda-shi Shizuoka 426 (JP)**
Inventor: **Nakayama, Kiyoshi**
**11-10, Nishi-kusabuka-cho**
**Shizuoka-shi Shizuoka 420 (JP)**
Inventor: **Ito, Yasutoshi**
**203, Kiei Building 7-17, Nishi-chiyoda-cho**
**Shizuoka-shi Shizuoka 420 (JP)**

(74) Representative: **Riederer Freiherr von Paar zu**
**Schönau, Anton et al**
**Van der Werth, Lederer & Riederer Freyung 615**
**Postfach 2664**
**D-8300 Landshut (DE)**

Courier Press, Leamington Spa, England.

# Description

## Background of the invention

### Field of the invention

The present invention relates to an electrically foldable door mirror for a motor vehicle as specified in the preamble of claim 1 and as disclosed in the DE—U—7 503 867 document. More particularly, the invention relates to a door mirror which can be folded forward or backward both by remote control from inside the motor vehicle and by manual operation, said door mirror being smoothly folded also when it receives an external shock.

## Description of the prior art

In conventional door mirrors, the mirror body is attached to its base by means of a coiled spring, etc. so that the mirror body turns forward or backward when the door mirror receives a strong external force, in order to weaken the shock and ensure safety. However, because the door mirror protrudes sideways from the vehicle body more than the fender mirror, the door mirror offers problems when a motor vehicle equipped therewith is parked in a narrow space or transported. Particularly when a motor vehicle equipped with door mirrors enters a three-dimensional car park, the door mirrors may hit a side wall, iron frame, etc. of the car park and do damage thereto as well as to the door mirrors themselves. Some known door mirrors can be kept in a folded state within the outermost line of the vehicle body in order to prevent the aforesaid problems. For example, the door mirrors are mechanically kept in a folded state by means of an engaging catch, etc. provided in a mirror folding mechanism.

In conventional foldable door mirrors, the vehicle driver has to get out of the vehicle each time he folds them or returns them to their normal positions. With a view to preventing such a trouble, DE—U—7 503 867 describes an electrically foldable door mirror, comprising a base, a shaft erected on said base, and a mirror body rotatably attached to said shaft, electric driving means supported by a frame within said mirror body, a pinion secured to the output shaft of said electric driving means, said pinion being engaged with a clutch gear attached to a first upper portion of said shaft, a first upper clutch disposed between one surface of said clutch gear and a first end of said shaft, and a second lower clutch disposed between a surface of said frame at the position of insertion of said shaft and the opposing surface of said base, whereby springs act generally parallel to the axis of said shaft so as to give a force of engagement to both of said clutches, said first upper clutch being more strongly engaged than said second lower clutch so that said second lower clutch is disengaged earlier when said mirror body is turned. Further, Japanese Patent Application No. Sho 58-247796 published as JP—A—60-143154 with the publication date of 29.07.1985 describes a door mirror, containing an electric motor and gears within its mirror body, which can be electrically folded by remote control from inside the motor vehicle. This prior art door mirror comprises mounting arms formed on the mounting surface of a base to be attached to the triangular window of a car, mounting brackets formed at one side edge of a body support attached inside a mirror body, a shaft fitted to shaft inserting holes formed at the mounting arms and the brackets to attach swingably forward or backward of the car the mirror body to the base, a reversible electric motor fixed to the mounting surface, and swinging means of the body support attached to the mounting brackets, the swinging means and the output shaft of the motor being fixed to the mounting surface coupled through reducing gear means. The mirror body can be readily swung manually by providing means for suitably disengaging the connection of the reversible electric motor with the swinging means. This door mirror has only one ball clutch in a pivot shaft, so that the gears receive an excessive load and the mirror body does not smoothly turn when it is folded by hand or by other external force.

Such electrically foldable door mirrors should have means for automatically stopping the electric driving means of the mirror body when the mirror body has come to a position of turning limit or a normal (erected) position, but the stopping means is known door mirrors is complicated and expensive.

## Summary of invention

It is an object of the present invention to provide an electrically foldable door mirror which can be folded forward or backward by remote control from inside the motor vehicle not only to a desired angle but also to the very limit just before contacting the outer panel of the motor vehicle, and can be maintained in such a state. This results from the invention as characterised in claim 1 which provides an electrically foldable door mirror having means for stopping the electric driving means of the mirror body automatically and surely, said stopping means being not expensive to manufacture and easy to attach. In the claim, the terms "upper" and "lower" clutch serve to discriminate the clutches, a different e.g. an upside-down construction also being claimed to be covered.

Thus, in the present invention, when the mirror body has turned to the position of the turning limit or returned to the normal position, the electric driving means is automatically stopped and the mirror body is maintained in the position. At the time of manual operation, the upper clutch is disengaged after the lower clutch, and the mirror body can be turned to a desired angle. When the mirror body receives a shock, both of the upper and lower clutches are disengaged at the same time, and the mirror body is turned. Whether the mirror body is turned by hand or by other external force, the gears do not receive any load and they are free from troubles.

Description of the drawings
Figs. 1 to 10 show an embodiment of the invention,
Fig. 1 is a partially cutaway front view of an electrically foldable door mirror;
Fig. 2 is a sectional plan view taken on line II—II of Fig. 1;
Fig. 3 is a vertical sectional view taken on line III—III of Fig. 2;
Fig. 4 is a cross-sectional plan view showing a portion of said door mirror folded backward;
Fig. 5 is a cross-sectional plan view showing a portion of said door mirror folded forward;
Fig. 6 is an exploded view showing the relation between a shaft on a base and a mirror body;
Fig. 7 is a perspective view showing a fixed clutch and a clutch gear;
Figs. 8 and 9 are perspective views showing modified examples of Fig. 7;
Fig. 10 is a plan view showing the relation between a pinion and said clutch gear.

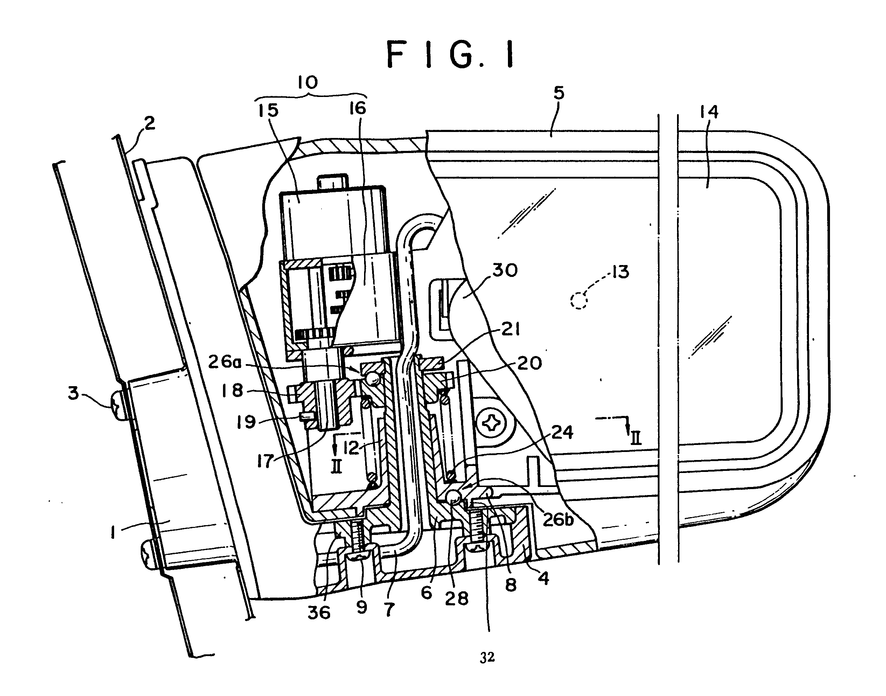

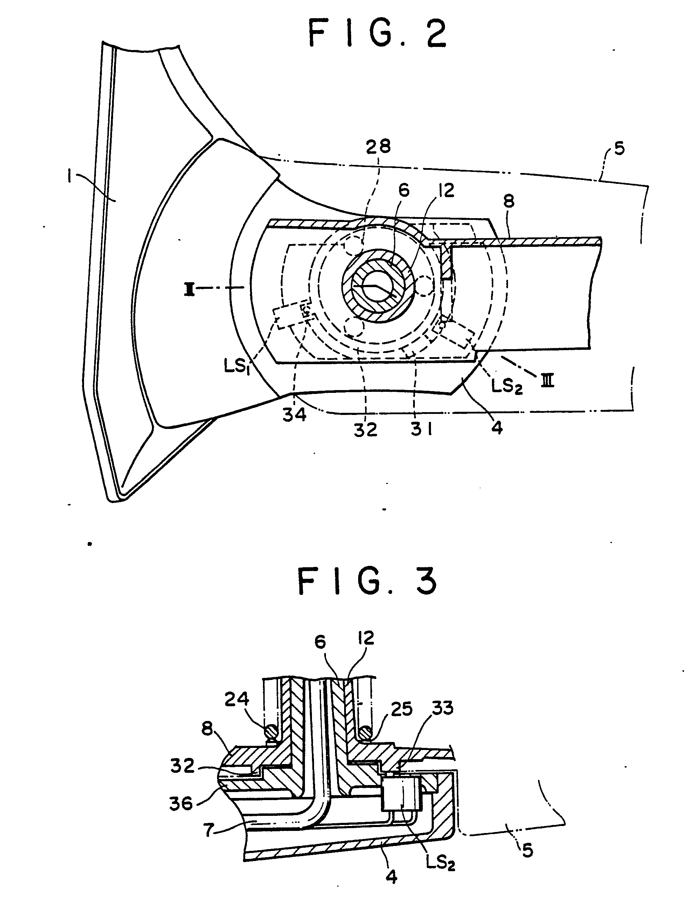

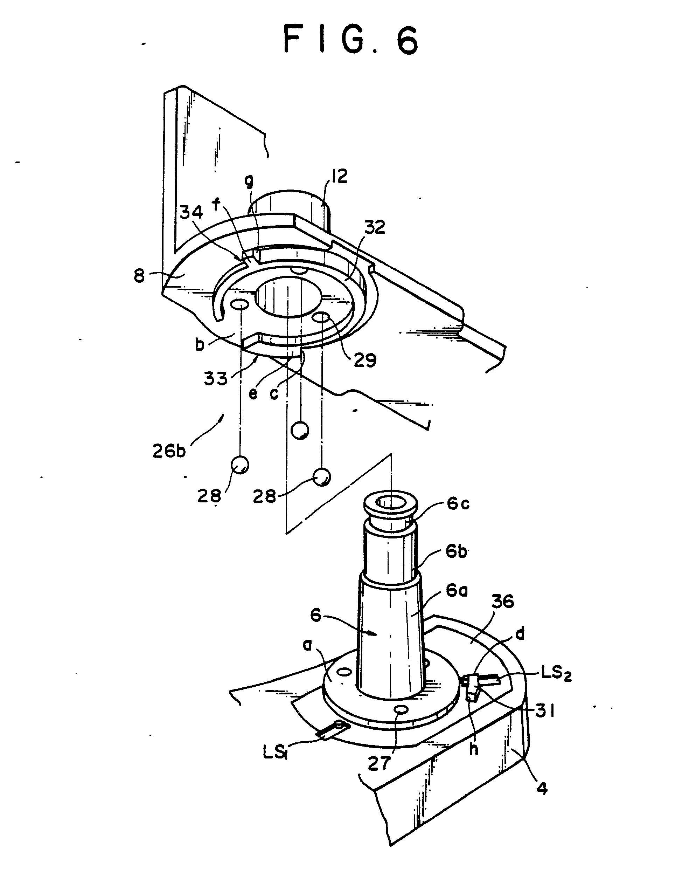

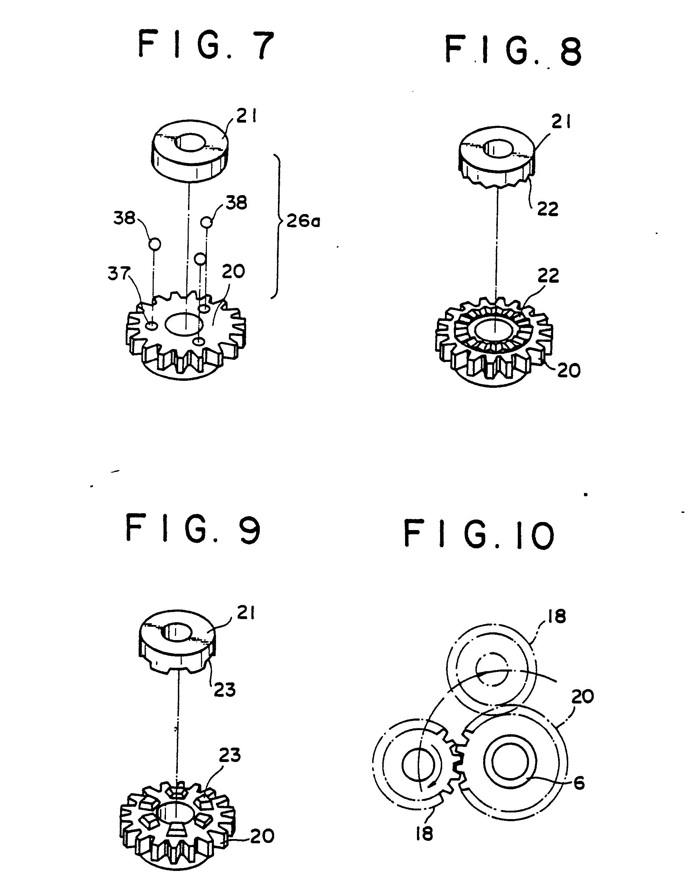

Detailed description of the preferred embodiments
The present invention will now be described with reference to the attached drawings. It is to be noted that the attached drawings show a righthand door mirror, drawings of a left-hand door mirror being omitted.
In the embodiment, as shown in Figs. 1 and 2, electric driving means 10, such as a DC electric motor with reduction gears, is disposed within a mirror body 5, a pinion 18 being fastened to the output shaft of said electric driving means 10, said pinion 18 being engaged with a clutch gear 20 attached to the upper portion of a shaft 6, an upper clutch 26a being disposed between the upper surface of said clutch gear 20 and the upper end of said shaft 6, a lower clutch 26b being disposed between the lower surface of a frame at the position of insertion of said shaft 6 and the opposing surface of a base, a coiled spring 24 being provided around said shaft 6 so as to give a force of engagement to both of said clutches 26a, 26b, said upper clutch 26a being slightly more strongly engaged than said lower clutch 26b. When the door mirror is electrically folded, the rotation of the pinion 18 disengages the weakly engaged lower clutch 26b so that the mirror body 5 can be turned. In manual operation, when the mirror body 5 is forcibly turned by hand, the lower clutch 26b is disengaged and then the upper clutch 26a is disengaged so that the mirror body 5 can be turned, because the pinion 18 is engaged with the clutch gear 20. When the mirror body 5 receives an external shock, both the upper and lower clutches 26a, 26b are disengaged at the same time so that the mirror body 5 can be turned. In this way, the clutches 26a, 26b are adapted to operate effectively according to the force exerted on the mirror body 5.
Parts of the door mirror will now be described in detail. In Figs. 1 and 2, numeral 1 represents a base fastened, for example, to the triangular corner 2 of a door window of a motor vehicle by means of screws 3. Numeral 4 represents a bracket extending approximately horizontally from the lower portion of the base 1. Numeral 5 represents a mirror body. Numeral 6 represents a shaft erected on the bracket 4. Numeral 14 represents a mirror, and numeral 13 represents a pivot thereof.
Since the mirror body 5 illustrated in Fig. 1 contains an actuator 30 for changing the angle of reflection of the mirror, the shaft 6 has a central hole through which a harness 7 passes. When the mirror body 5 does not contain such an actuator, the shaft 6 is not required to be hollow. In Fig. 1, the shaft 6 is a member separate from the base 1, and is secured thereto at its root portion 36 by means of screws 9. However, the shaft 6 may be formed integrally with the base 1, and in this case securing by means of screws is eliminated.
A frame 8 is secured within the mirror body 5, and said actuator 30 is disposed approximately in the center of the frame 8. The frame 8 supports, near the base 1, electric driving means 10 which gives a driving force for the folding operation of the door mirror, and the frame 8 has a shaft bearing 12 into which the shaft 6 is inserted. The electric driving means 10 comprises a DC electric motor 15 and a gear box 16 containing reduction gears. A pinion 18 is secured to the output shaft 17 of the gear box 16. In Fig. 1, the pinion 18 is secured to the output shaft 17 by means of a pin 19. Alternatively the pinion 18 may be secured thereto by press fit or by means of a key and a key way.
As shown in Fig. 6, the shaft bearing 12 of the frame 8 is slightly tapered, and the shaft 6 has a taper portion 6a corresponding thereto. When the shaft bearing 12 of the frame 8 is put on the taper portion 6a of the shaft 6, the whole frame 8 is rotatable and axially slidable with relation to the shaft 6.
The shaft 6 has a cylindrical portion 6b above said taper portion 6a, and a clutch gear 20 engaged with said pinion 18 is attached to the cylindrical portion 6b. The shaft 6 has a narrow portion 6c above said cylindrical portion 6b, and a fixed clutch 21 is fixed to the narrow portion 6c. The opposing surfaces of the clutch gear 20 and the fixed clutch 21 form an upper clutch 26a. The upper clutch 26a may be, as shown in Fig. 7, a ball clutch comprising a plurality of (three in Fig. 7) holes 37 respectively provided in the upper surface of the clutch gear 20 and the lower surface of the fixed clutch 21, and balls 38 fitted in said holes 37. Alternatively the upper clutch 26a may comprise sidge-shaped catches 22 (Fig. 8) or tooth-shaped catches 23 (Fig. 9).
A coiled spring 24 is disposed around the shaft bearing 12 so as to give a force of engagement to both of said upper clutch 26a and a lower clutch 26b described below.
As shown in Fig. 6, the lower clutch 26b is a ball clutch comprising holes 27, 29 provided in a plurality of (three, for example) positions on a circle both on a surface (a) around the root portion of the shaft 6 and a corresponding surface (b) of the frame 8, and balls 28 fitted in said holes 27, 29. The engagement of the lower clutch 26b is made weaker than that of the upper clutch 26a by, for example, fitting the balls 28 of the lower clutch 26b more shallowly in the holes or making the balls 28 larger, as compared with the balls 38 of the upper clutch 26a. Thus, for example when the mirror body 5 is turned by hand, the lower clutch 26b is disengaged slightly earlier than the upper clutch 26a so that the mirror body 5 can be turned smoothly.

According to the present invention, it is possible to set the limits of turning of the mirror body 5 in order to prevent damage to the outer panel of the vehicle.

For this purpose, the door mirror has stopping means and detecting means. The stopping means comprises, as shown in Fig. 6, a stopper 31 disposed outside the surface (a) around the root portion of the shaft 6, and projections 33, 34 provided at suitably angularly separated positions on the outside of a segmental projection 32 formed on the surface (b) of the frame 8. Thereby, the stopping means mechanically sets the limits of turning of the mirror body 5.

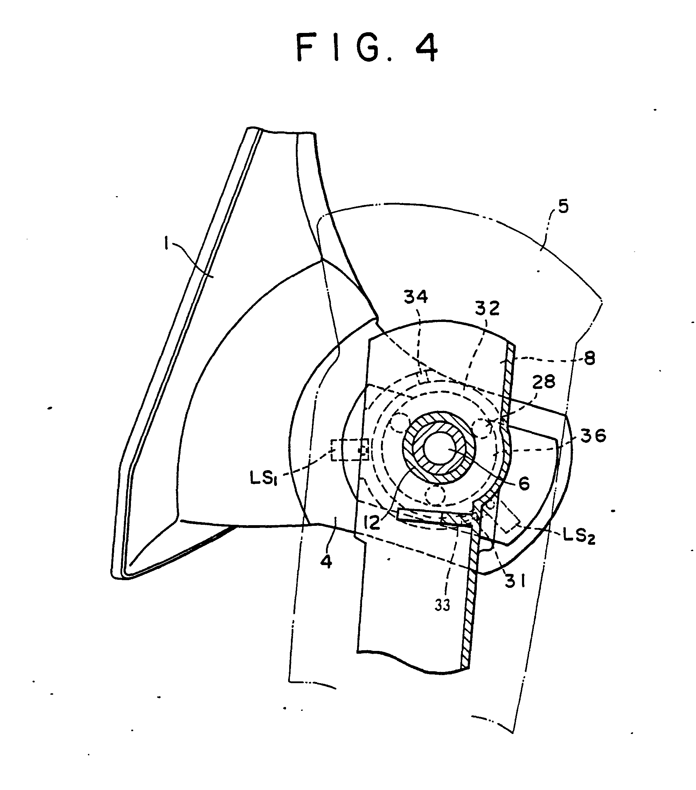

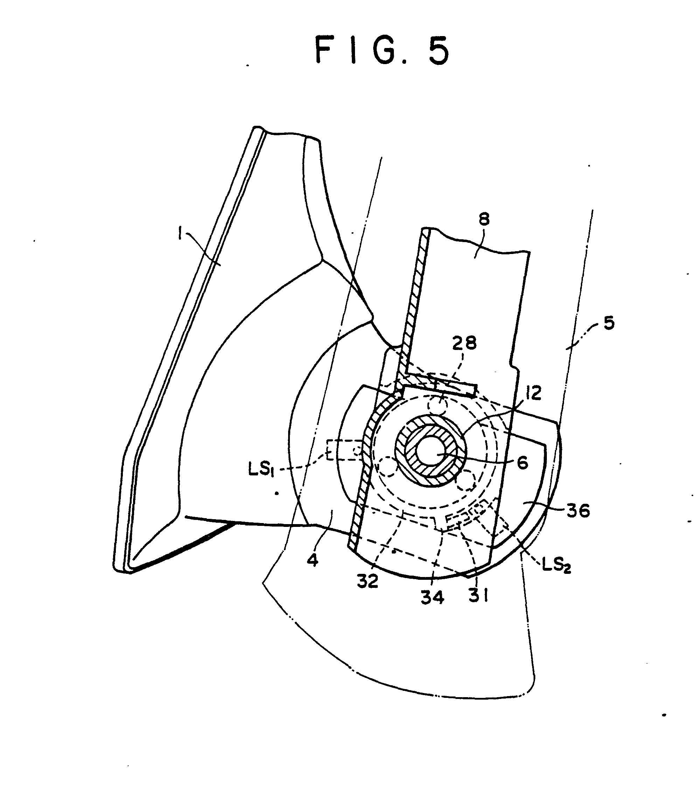

The stopper 31 is disposed on the locus of turning of the projections 33, 34. Therefore, when the mirror body 5 is turned backward as shown in Fig. 4, the end (c) of the projection 33 contacts the end (d) of the stopper 31 so that the mirror body 5 cannot turn any more. When the mirror body 5 is turned forward as shown in Fig. 5, the end (g) of the other projection 34 contacts the end (h) of the stopper 31 so that the mirror body 5 cannot turn any more.

The detecting means comprises a limit switch $LS_1$ for detecting the normal position (neutral position) of the mirror body 5, and another limit switch $LS_2$ for detecting the position of the rear turning limit of the mirror body 5. The limit switch $LS_1$ is buried, near the base 1, beside the surface (a) as shown in Fig. 6. When the mirror body 5 is in the neutral position, the surface (f) of the projection 34 pushes down the plunger (not shown) of the limit switch $LS_1$ so as to actuate the limit switch $LS_1$. The limit switch $LS_2$ is buried beside the stopper 31 as shown in Fig. 6. When the mirror body 5 is turned backward to the limit as shown in Fig. 4, the surface (e) of the projection 33 pushes down the plunger of the limit switch $LS_2$ so as to actuate the limit switch $LS_2$. These limit switches $LS_1$, $LS_2$ are contained in the driving circuit of the DC electric motor 15. When any of the limit switches $LS_1$, $LS_2$ is actuated after the main switch is turned on, the DC electric motor 15 is stopped.

The operation of the door mirror will now be described.

I. Normal position (neutral position)

Figs. 1 and 2 show the state that the mirror body 5 is erected, that is, the mirror body 5 stays in the normal position. In this state, the upper clutch 26a and the lower clutch 26b are respectively engaged by the force of the coiled spring 24. Also, the surface (f) (Fig. 6) of the frame 8 is in contact with the limit switch $LS_1$ and the DC electric motor 15 is stopped.

The upper clutch 26a is slightly more strongly engaged than the lower clutch 26b as mentioned above. Therefore, when the door mirror is electrically folded, only the lower clutch 26b is disengaged and the engagement of the upper clutch 26a is maintained, thus the mirror body 5 being turned by the pinion 18 and the clutch gear 20. If the load becomes larger at this time, the upper clutch 26a is disengaged so that the mechanism driving the pinion 18 is not overloaded. When the door mirror is folded by hand, the lower clutch 26b is disengaged first, and then the upper clutch 26a is disengaged. When the door mirror receives an external shock, both upper clutch 26a and the lower clutch 26b are disengaged at the same time, and the mirror body 5 is turned by the external force. When the mirror body 5 is turned, it can be stopped at any angle within the limit of turning.

II. Folding by automatic operation

Torque required for disengaging the upper clutch 26a and the lower clutch 26b will be described first. The rotation of the DC electric motor 15 is slowed down by the gear box 16 and transmitted through the pinion 18 to the clutch gear 20 so as to cause relative rotation to the shaft bearing 12 into which the shaft 6 is inserted. If torque required for disengaging the upper clutch 26a is represented by "Ta" and torque required for disengaging the lower clutch 26b is represented by "Tb", then

$$Ta > Tb.$$

Said Tb is, in other words, the torque required for raising the balls 28 of the lower clutch 26b from the holes 27 around the root portion of the shaft 6 onto the surface (a) while the balls 28 are held in the holes 29 in the surface (b) of the frame (8). Therefore, within the range of this torque, the upper clutch 26a between the clutch gear 20 and the fixed clutch 21 is not disengaged. Thus, the clutch gear 20 is not rotated and the pinion 18 rotates both round the clutch gear 20 and on its axis (Fig. 10) so as to turn the mirror body 5.

Backward folding

If the DC electric motor 15 is actuated when the mirror body 5 is in the neutral position, the frame 8 turns on the shaft 6 with the rotation of the pinion 18 because the clutch gear 20 is unrotatably engaged with the fixed clutch 21. If the DC electric motor 15 is stopped when the mirror body 5 is at a desired angle (for example, about 45°), the mirror body 5 is maintained in that position with the clutch gear 20 engaged with the pinion 18.

If it is necessary to turn the mirror body 5 further to the rear turning limit, the DC electric motor 15 is continued to be actuated to turn the mirror body 5 further. Then, the turning of the mirror body 5 is mechanically stopped when the end (c) of the projection 33 contacts the end (d) of the stopper 31, and at the same time the DC electric motor 15 is automatically deenergized because the surface (e) of the projection 33 pushes down the plunger of the limit switch $LS_2$ for detecting the position of the rear turning limit of the mirror body 5 (See Fig. 3). Now the mirror body 5 is stopped at the position of the rear turning limit as shown in Fig. 4.

Returning to neutral position

If the DC electric motor 15 is reversed by means of the main switch when the mirror body 5 is in an arbitrary rear position or the position of the rear turning limit, the pinion 18 is rotated in the direction opposite to the direction shown in Fig. 10. This rotation of the pinion 18 turns the mirror body 5 until the balls 28 held in the holes 29 (Fig. 6) in the surface (b) of the frame 8 enter the holes 27 in the surface (a) around the shaft 6. At this time, the surface (f) of the projection 34 on the frame 8 pushes down the plunger of the limit switch $LS_1$ and the DC electric motor 15 is stopped thereby. In this way, the mirror body 5 is returned to the position shown in Fig. 2.

III. Folding by manual operation or external shock

The door mirror receives different external forces and operates differently according to whether it is folded by manual operation or by external shock.

In manual operation, the pinion 18 engaged with the clutch gear 20 is rotated slowly, and in the meanwhile the weakly engaged lower clutch 26b is disengaged. Then, a thrust in the axial direction of the clutch gear 20 is produced by a tangential force exerted on the balls 38 (Fig. 7) or catches 22, 23 (Figs. 8 and 9) of the upper clutch 26a. As a result, the clutch gear 20 is slightly pushed down along the cylindrical portion 6b and disengaged from the fixed clutch 21. Therefore, the mirror body 5 can be manually turned on the shaft 6.

If the mirror body 5 receives an external shock which is larger than said torque Ta for disengaging the upper clutch 26a when the motor vehicle is in operation or at a stop, both the upper clutch 26a and the lower clutch 26b are disengaged at the same time and the mirror body 5 is turned forward or backward.

The mirror body 5 in the neutral position can be turned forward to a desired position by hand. If the mirror body 5 is turned forward further, the end (g) of the projection 34 contacts the end (h) of the stopper 31 and therefore the mirror body 5 is stopped at the position of the front turning limit as shown in Fig. 5. If there is a limit switch (not shown) for detecting the position of the front turning limit, the mirror body 5 can be returned, by remote control, to the neutral position from the position of the front turning limit in the same way as from the position of the rear turning limit.

As is evident from the foregoing, the door mirror has means for automatically stopping the electric driving means, said stopping means being disposed between one surface of a fixed clutch fixed to the upper end of said shaft and a surface of a mirror body opposing said one surface of the fixed clutch, said stopping means comprising a printed circuit and contact pieces slidable thereon. Therefore, in the position of the turning limit, the switch for detecting the position of the turning limit is open, and the mirror body is automatically stopped and kept in this position. If the electric driving means is reversed by means of the operation switch, the mirror body is turned from the position of the turning limit to the neutral (erected) position and kept in the neutral position.

**Claims**

1. Electrically foldable door mirror comprising a base (1), a shaft (6) erected on said base, and a mirror body (5) rotatably attached to said shaft, electric driving means (10) supported by a frame (8) within said mirror body, a pinion (18) secured to the output shaft (17) of said electric driving means, said pinion being engaged with a clutch gear (20) attached to a first portion of said shaft, an upper clutch (26a) disposed between one surface of said clutch gear and a first end of said shaft, a lower clutch (26b) disposed between a surface of said frame at the position of insertion of said shaft and the opposing surface of said base, at least one spring (24) acting generally parallel to the axis of said shaft so as to give a force of engagement to both of said clutches, said upper clutch being more strongly engaged than said lower clutch so that said lower clutch is disengaged earlier when said mirror body is turned, characterized in that a limit switch ($LS_1$, $LS_2$) is provided near said base (1), besides said shaft (6), said limit switch being adapted to detect at least the normal position of said mirror body (5).

2. Electrically foldable door mirror as claimed in claim 1, characterized in that each of said upper or lower clutches (26a, 26b) comprises a plurality of balls (28) being fitted in holes (27, 29), and is adapted to make click action so that said mirror body (5) can be turned by hand.

3. Electrically foldable door mirror as claimed in claim 1 or 2, characterized in that said upper clutch (26a) is adapted to be disengaged when the load becomes larger, so that a mechanism (15, 16) driving said pinion (18) is not overloaded.

4. Electrically foldable door mirror as claimed in any of claims 1 to 3, characterized in that the clutch gear (20) is attached to the upper portion of the shaft (6), the upper clutch (26a) is disposed between the upper surface of the clutch gear (20) and the upper end of the shaft, and the lower clutch (26b) is disposed between the lower surface of the frame (8) and the opposing surface of the base, and that the at least one spring is a coiled spring (24) provided around the shaft (6).

5. Electrically foldable door mirror as claimed in any of claims 1 to 4, characterized by stopping means which comprise projections (33, 34) provided at angularly separated positions at the frame (8) along a rotational path thereof, and a stopper (31) disposed on the path of the projections (33, 34) in fixed relation to the shaft (6), the contact positions of the projections (33, 34) with the stopper defining the limits of turning the mirror body (5).

## Patentansprüche

1. Elektrisch klappbarer Türspiegel mit einer Basis (1), einer von der Basis nach oben abstehenden Achse (6), einem drehbar auf der Achse befestigten Spiegelkörper (5), einer von einem Rahmen (8) innerhalb des Spiegelkörpers getragenen elektrischen Antriebseinrichtung (10), einem an der Ausgangswelle (17) der elektrischen Antriebseinrichtung befestigten Ritzel (18), an dem ein Kupplungs-Zahnrad (20) angreift, das an einem ersten Teil der Achse sitzt, einer zwischen der einen Oberfläche des Kupplungs-Zahnrads und einem ersten Ende der Achse befindlichen oberen Kupplung (26a), einer zwischen einer Fläche des Rahmens an der Stelle des Eintritts der Achse und der gegenüberliegenden Fläche der Basis befindlichen unteren Kupplung (26b), und wenigstens einer Feder (24), die allgemein parallel zur Längslinie der Achse wirkt und so eine einkuppelnde Kraft auf die beiden Kupplungen ausübt, wobei die obere Kupplung einen stärkeren Eingriff hat als die untere Kupplung, die somit beim Drehen des Spiegelkörpers früher auskuppelt, dadurch gekennzeichnet, daß nahe der Basis (1) neben der Achse (6) ein Begrenzungsschalter (LS$_1$, LS$_2$) angeordnet ist, der wenigstens die Normalstellung des Spiegelkörpers (5) erkennt.

2. Elektrisch klappbarer Türspiegel nach Anspruch 1, dadurch gekennzeichnet, daß sowohl die obere Kupplung (26a) als auch die untere Kupplung (26b) jeweils eine Mehrzahl von Kugeln (28) umfassen, die in Löcher (27, 20) eingepaßt sind, und ausklickbar sind, so daß der Spiegelkörper (5) von Hand drehbar ist.

3. Elektrisch klappbarer Türspiegel nach Anspruch 1 oder 2, dadurch gekennzeichnet, daß die obere Kupplung (26a) bei steigender Belastung auskuppelt, so daß ein das Ritzel (18) antreibender Mechanismus (15, 16) nicht überlastet wird.

4. Elektrisch klappbarer Türspiegel nach einem der Ansprüche 1 bis 3, dadurch gekennzeichnet, daß das Kupplungs-Zahnrad (20) am oberen Teil der Achse (6) sitzt, die obere Kupplung (26a) zwischen der oberen Fläche des Kupplungs-Zahnrads (20) und dem oberen Ende der Achse liegt und die untere Kupplung (26b) zwischen der unteren Fläche des Rahmens (8) und der gegenüberliegenden Fläche der Basis liegt, und daß die wenigstens eine Feder eine um die Achse (6) liegende Schraubenfeder (24) ist.

5. Elektrisch klappbarer Türspiegel nach einem der Ansprüche 1 bis 4, gekennzeichnet durch Stoppeinrichtungen mit Vorsprüngen (33, 34), die in winkelmäßig getrennten Stellungen am Rahmen (8) entlang einem Umdrehungsweg des Rahmens liegen, und mit einem Stopper (31), der am Weg der Vorsprünge (33, 34) in fester Beziehung zur Achse (6) angeordnet ist, wobei die Berührungsstellungen der Vorsprünge (33, 34) mit dem Stopper die Drehgrenzen des Spiegelkörpers (5) bestimmen.

## Revendications

1. Rétroviseur de porte, repliable électriquement, comprenant une embase (1), une tige (6) érigée sur ladite embase, un corps de rétroviseur (5) pivotant sur ladite tige, un dispositif de manoeuvre électrique (10) supporté par un cadre (8) à l'intérieur du corps de rétroviseur, un pignon (18) fixé sur l'axe de sortie (17) du dispositif de manoeuvre électrique, ledit pignon entraînant une roue dentée (20) de couplage attachée sur une première partie de la tige, un couplage supérieur (26a) situé entre une face de la roue dentée et un premier bout de la tige, un couplage inférieur (26b) situé entre une des faces de cadre à l'endroit où la tige y pénètre, et la partie de l'embase lui faisant face, et au moins un ressort (24) développant une force generalement parallèle à l'axe de la tige e exerçant une force d'accouplement sur les deux systèmes de couplage, l'accouplement supérieur étant plus rigide que l'accouplement inférieur qui débraye le premier quand ledit corps de rétroviseur est pivoté, caractérisé en ce qu'un contact d'arrêt (LS1, LS2) est disposé à proximité de l'embase (1), à côté de la tige (6), ce contact d'arrêt (LS1, LS2) ayant la possibilité de réconnaître au moins la position normale du corps de rétroviseur (5).

2. Rétroviseur de porte, repliable électriquement, selon la revendication 1, caractérisé en ce que le couplage supérieur (26a) et le couplage inférieur (26b) possèdent chacun un certain nombre de billes (28) encastrées dans des trous (27, 29) et désenclenchables de façon à ce que le corps de rétroviseur (5) puisse être manoeuvré à la main.

3. Rétroviseur de porte, repliable électriquement, selon la revendication 1 ou 2, caractérisé en ce que le couplage supérieur (26a) débraye quand l'effort appliqué augmente, de façon à ce qu'un mécanisme (15, 16) d'entraînement du pignon (18) ne soit pas surchargé.

4. Rétroviseur de porte, repliable électriquement, selon une des revendications 1 à 3, caractérisé en ce que la roue dentée (20) de couplage est fixée en haut de la tige (6), que le couplage supérieur (26a) se situe entre la face supérieure de la roue dentée (20) et le bout supérieur de la tige, et que le couplage inférieur (26b) se situe entre la face inférieure du cadre (8) et la surface de l'embase située en regard, et que ce ressort (ou ces ressorts) est un ressort hélicoidal (24) placé autour de la tige (6).

5. Rétroviseur de porte, repliable électriquement, selon une des revendications 1 à 4, caractérisé par des dispositifs de limite de manoeuvre avec des saillies (33, 34) situées à des positions angulaires déterminées sur le cadre, le long d'une piste de rotation du cadre (8), et avec un stoppeur (31) faisant corps avec la tige (6) et disposé sur le chemin des saillies (33, 34), de sorte que les points de contact des saillies (33, 34) avec le stoppeur déterminent les limites de pivotement du corps de rétroviseur (5).

# FIG. I

EP 0 166 378 B1

# FIG. 2

# FIG. 3

# FIG. 4

# F I G. 5

# FIG. 6

# FIG. 7

# FIG. 8

# FIG. 9

# FIG. 10